Europäisches Patentamt

European Patent Office

Office européen des brevets

(19)

(11) Veröffentlichungsnummer : **0 204 738**
**B1**

(12) EUROPÄISCHE PATENTSCHRIFT

(45) Veröffentlichungstag der Patentschrift :
09.08.89

(21) Anmeldenummer : 85905778.8

(22) Anmeldetag : 19.11.85

(86) Internationale Anmeldenummer :
PCT/DE 85/00478

(87) Internationale Veröffentlichungsnummer :
WO/8603270 (05.06.86 Gazette 86/12)

(51) Int. Cl.⁴ : **F 16 H 27/02**

(54) VORRICHTUNG ZUM SCHRITTWEISEN ANTREIBEN EINER ACHSWELLE.

(30) Priorität : 20.11.84 DE 3442334

(43) Veröffentlichungstag der Anmeldung :
17.12.86 Patentblatt 86/51

(45) Bekanntmachung des Hinweises auf die Patenterteilung : 09.08.89 Patentblatt 89/32

(84) Benannte Vertragsstaaten :
CH FR GB IT LI NL

(56) Entgegenhaltungen :
DE–A– 2 529 510
DE–B– 1 284 792
GB–A–   178 901
GB–A–   848 714
US–A– 2 415 872
US–A– 3 969 945

(73) Patentinhaber : WALDORF, Veronika
Stahringer Str.10a
D-7768 Stockach 14 (DE)

GAIGL, Karl-Josef
Stahringer Str.10a
D-7768 Stockach 14 (DE)

(72) Erfinder : GAIGL, Karl-Josef
Stahringer Strasse 10a
D-7768 Stockach 14 (DE)

(74) Vertreter : Weiss, Peter, Dr.
WEISS & OTT Schlachthausstrasse 1 Postfach 466
D-7700 Singen a.H. (DE)

## Beschreibung

Die Erfindung betrifft eine Vorrichtung entsprechend dem Oberbegriff von Anspruch 1.

Eine derartige Vorrichtung ist aus der DE-B 1 284 792 bekannt. Es sind auch weitere Kurven- und Schrittgetriebe in vielfältiger Form bekannt. Definitionsgemäß dienen Schrittgetriebe der Wandlung einer gleichförmigen in eine schrittweise Bewegung. Sie erzeugen die Rast zum Beispiel dadurch, daß Getriebeglieder periodisch außer Eingriff kommen und der Ruhezustand durch ein Gesperre gesichert wird. Derartige Getriebe werden beispielsweise durch Scheibenoder Zylinderkurven gebildet. Beispielsweise ein Zylinderkurven-Schrittgetriebe zeigt einen um eine Achse senkrecht zu der anzutreibenden Achse drehenden Zylinder, wobei auf dem Zylindermantel Kurvenkanäle eingeformt sind, welche von Eingriffselementen an einem um die anzutreibende Achse angeordneten Drehteller abgefahren werden. Dabei wird also lediglich die eine gleichförmige Drehbewegung in eine andere schrittweise Drehbewegung umgewandelt.

Bekannt sind auch Schrittantriebe, bei denen beispielsweise die Linearbewegung einer Zahnstange od. dgl. in eine schrittweise Drehbewegung umgewandelt wird, jedoch muß beim Rückhub die Zahnstange außer Eingriff mit der anzutreibenden Drehachse gebracht werden.

Der Erfinder hat sich zum Ziel gesetzt, einen Schrittantrieb der oben genannten Art zu schaffen, bei welchem sowohl Vor- wie auch Rückhub beispielsweise eines Hubzylinders in eine gleichförmige schrittweise Bewegung einer Drehachse umgewandelt wird. Dabei soll die Drehachse mit dem Antrieb ständig kraftschlüssig in Verbindung stehen.

Zur Lösung dieser Aufgabe führen die im Anspruch 1 aufgeführten Merkmale.

Dabei soll unter einer Kurvenöffnung nicht nur ein Durchbruch im Schieber selbst verstanden werden, sondern die Kurvenöffnung kann beispielsweise auch durch dem Schieber in einer bestimmten Formation aufgesetzte Leisten gebildet werden.

Die Mittelachse der Kurvenöffnung in Bewegung verläuft durch die Achse der Achswelle, das heißt der Schieber bewegt sich sowohl bei Vor- wie auch bei Rückhub in einer Ebene senkrecht zur Achswelle.

Zum Umsetzen der oszillierenden Linearbewegung des Schiebers weist nun die Kurvenöffnung Aufnahmeschalen zum Mitnehmen der Drehstange/n auf. Diese Aufnahmeschalen sollen senkrecht zur Hubbewegung angeordnet sein. In Hubbewegung dagegen sieht die Erfindung Kurvensegmente zum Festlegen der Endlage der Drehstange/n nach einer Hubbewegung vor.

Es hat sich weiterhin als günstig erwiesen, mehrere Drehstangen um einen Mittelpunkt herum in einem bestimmten Winkel zueinander anzuordnen, wobei der Mittelpunkt vorzugsweise auf der Mittelachse der Kurvenöffnung liegt. Der Erfindungsgedanke umfaßt hier selbstverständlich auch andere Möglichkeiten, die im Rahmen des handwerklichen Könnens liegen und insbesondere durch Versuche ermittelt werden können. Am einfachsten und wirkungsvollsten ist es, wenn der Winkel 120° beträgt und dementsprechend drei Drehstangen vorgesehen sind. Die Mittelpunkte dieser Drehstangen beschreiben dann einen Kreis mit einem bestimmten Radius. Um dann eine genaue Dreiteilung des Schrittantriebs zu erreichen, soll die Breite der Kurvenöffnung dem Abstand zweier benachbarter Drehstangen zuzüglich deren doppelten Querschnittsradien entsprechen. Im Zusammenwirken mit den Aufnahmeschalen bzw. den Kurvensegmenten wird dann bei Vor- und Rückhub ein kraftschlüssiger Halt der Drehstangen erzeugt.

Um die gleichförmige Drehung in einer Querrichtung selbst sowohl bei Rück- wie auch bei Vorhub zu gewährleisten, ragen die Aufnahmeschalen über den von der oben genannten Breite gebildeten Lichtraum in einer Tiefe hinaus, welche dem Radius des Kreises zuzüglich eines Querschnittsradius einer Drehstange vermindert um die Hälfte der Breite entspricht. Diese Aufnahmeschalen sollen dann noch um ein bestimmtes Maß in den Lichtraum der Breite hineinragen, wobei dieses Maß bevorzugt dem Radius einer Drehstange entspricht. Damit wird ein günstiger Angriffswinkel der Aufnahmeschale an eine Drehstange zu deren Bewegung gewährleistet. Ebenfalls wirkt sich diese Bemaßung sehr günstig auf die Kraftübersetzung der Linearbewegung in die Drehbewegung aus.

Weiterhin ist vorgesehen, daß der Schieber in einem Gehäuse angeordnet wird, wobei er in einem Innenraum an Schienen gleitet. Die Drehstangen wiederum sollen einem Drehteller zugeordnet sein, welcher ein Teil der Achswelle ist. Dieser Drehteller kann sich dann oberhalb des Innenraumes in einem Kuppelraum in dem Gehäuse befinden. Die Achswelle selbst dreht in einem Kugellager und andererseits in einem Freilauf.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

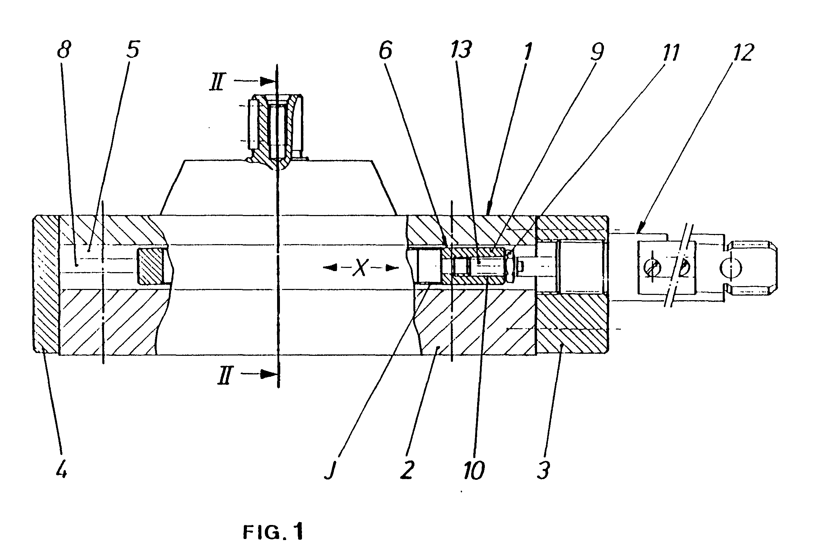

Figur 1 eine Seitenansicht eines erfindungsgemäßen Schrittantriebes, teilweise im Längsschnitt;

Figur 2 einen Querschnitt durch den Schrittantrieb entlang Linie II-II in Figur 1;

Figur 3 eine vergrößert dargestellte Draufsicht auf einen Schieber und schematisch dargestellte Drehstangen in Gebrauchslage.

Ein Schrittantrieb weist ein Gehäuseoberteil 1, ein Gehäuseunterteil 2, eine Anschlußplatte 3 sowie eine Stirnplatte 4 auf. Seitlich sind Seitenstreifen 5 zwischen Gehäuseober- und Gehäuseunterteil 1 bzw. 2 eingelagert. Diese Teile begrenzen einen Innenraum J, in welchem ein Schieber 6 lagert, wobei der Schieber 6 beidseits über je eine Nut 7 in den Seitenstreifen 5 angeformten Schienen 8 beweglich lagert.

Der Schieber 6 hat in seinem rückwärtigen Teil 9 eine Bohrung 10 zur Aufnahme eines Gewindebolzens 13, dessen Eindrehtiefe von einer Mutter 11 gesichert wird. Andernends ist dieser Gewindebolzen mit einem Antriebssystem 12, beispielsweise einem Pneumatikzylinder, verbunden, über welches der Schieber in Richtung x bewegt wird.

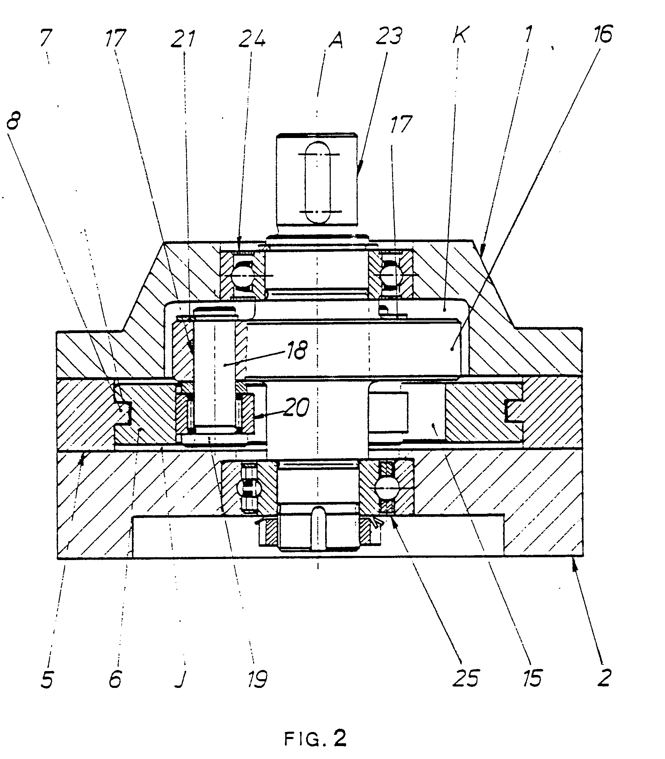

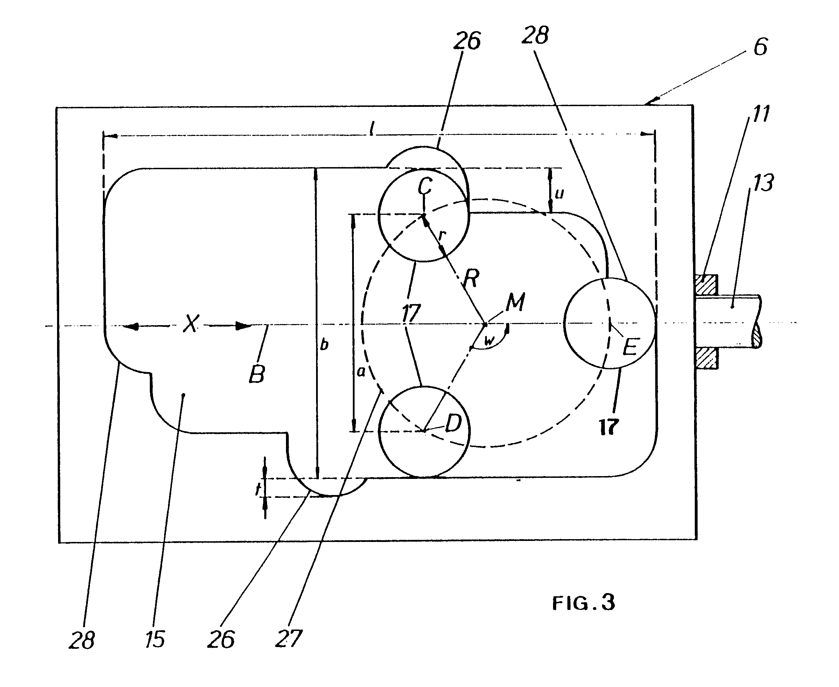

Der Schieber 6 weist nach Figur 3 eine Kurvenöffnung 15 auf, in welche drei Drehstangen 17 eingreifen. Nach Figur 2 sind die Drehstangen 17 an einem Drehteller 16 angeordnet und sind aus einem Bolzen 18 mit nach unten hängendem Kopf 19 sowie zwischen Kopf 19 und Drehteller 16 angeordneten Stützrollenlager 20 gebildet. Den Bolzen 18 sichert auf der Drehtelleroberseite ein Sprengring 21.

Der Drehteller 16 bildet auch einen Mittelpunkt M für eine Achswelle 23, welche in einem Rillenkugellager 24 in dem Gehäuseoberteil 1 ruht und sich gegenüber dem Gehäuseunterteil 2 über einen Freilauf 25 abstützt. Die Achswelle dreht um die Achse A, welche auch durch den Mittelpunkt M geht. Der Drehteller 16 ist im übrigen in einem vom Gehäuseoberteil 1 gebildeten Kuppelraum K oberhalb des Innenraums J angeordnet, so daß er die Bewegung des Schiebers 6 nicht stört, sondern nur mit seinen Drehstangen 17 in die Kurvenöffnung 15 eingreift. Diese Drehstangen sind in einem Winkel w von jeweils 120° zueinander um den Mittelpunkt M bzw. an dem Drehteller 16 befestigt.

Der Mittelpunkt M des Drehtellers 16 liegt im übrigen auf der Mittelachse B der Kurvenöffnung 15, die in dem gezeigten Ausführungsbeispiel mit der Mittelachse des Schiebers 6 übereinstimmt, was jedoch nicht zwingend notwendig ist.

Die Breite b der Kurvenöffnung 15 entspricht dem Abstand a zweier benachbarter Drehstangen 17, gemessen zwischen deren Mittelpunkten C und D zuzüglich des doppelten Radius r der Drehstangen 17.

Die Länge 1 der Kurvenöffnung 15 ist dagegen nicht festgelegt. Über sie wird die Länge des Leerhubes zwischen einzelnen Schrittbewegungen des Drehtellers 16 und damit die Pausen zwischen den einzelnen Takten bestimmt.

Die Breite b der Kurvenöffnung 15 spiegelt lediglich den Lichtraum wieder. Darüber hinaus sind jedoch beidseits Aufnahmeschalen 26 in dem Lichtraum ausgeformt, die mit einer Tiefe t über den Lichtraum hinausragen, wobei die Tiefe t dem Radius R des die Mittelpunkte C, D und E verbindenden Kreises 27 zuzüglich des Radius r vermindert um die Hälfte b entspricht. Die Aufnahmeschalen 26 überragen jedoch nicht nur in einer Tiefe t den Lichtraum der Breite b, sondern greifen auch in diesen um ein Maß u ein, welches im Ausführungsbeispiel dem Radius r entspricht. Damit ist ein günstiger Angriffswinkel Aufnahmeschale 26 — Drehstange 17 gewährleistet.

Zur Sicherung der Drehstange 17 in der Endphase der Bewegung sind beidseits entlang der Mittelachse B noch weitere Kurvensegmente 28 aus der Kurvenöffnung 15 herausgeformt, deren Kontur der Drehstange 17 bzw. deren Stützrollenlager 20 entspricht.

Figur 3 stellt eine Endlage des Schiebers dar. Dabei wird die Drehstange 17 mit dem Mittelpunkt E von dem Kurvensegment 28 gehalten, während die beiden anderen Drehstangen 17 jeweils mit Rand- bzw. Kantenbereichen der Kurvenöffnung 15 zusammenwirken. Wird nun der Schieber 6 nach rechts in Figur 3 verschoben, findet ein Leerhub statt, das heißt der Drehteller 16 bewegt sich nicht um die Achse A. Die Drehstange 17 mit dem Mittelpunkt E gelangt zwar außer Eingriff mit dem Kurvensegment 28, im gleichen Moment aber gleitet die kurzfristig freie Drehstange 17 mit dem Mittelpunkt C in den oberen Randbereich der Drehöffnung 15 ein. Infolge der oben geschilderten Bemaßung kann nun kein Drehen stattfinden, sondern der Drehteller mit den Drehstangen wird kraftschlüssig gehalten. Erst wenn sich die untere Drehstange 17 mit dem Mittelpunkt D über den Rand der unteren Aufnahmeschale 26 nach Figur 3 hinwegbewegt ist der Drehteller 16 freigegeben. Nun wird diese Drehstange 17 mit dem Mittelpunkt D von der unteren Aufnahmeschale 26 mitgenommen, der Drehteller 16 dreht um die Achse A, bis die Drehstange 17 mit dem Mittelpunkt C in das andere Kurvensegment 28 einfährt. Die Lage der anderen Drehstangen 17 mit den Mittelpunkten D und E ist dann spiegelbildlich verschoben zu der in Figur 3 gezeigten Lage der Drehstangen 17 mit den Mittelpunkten C und D. Nun findet ein Rückhub statt, wobei die bis dahin sich nahe der oberen Aufnahmeschale 26 befindliche Drehstange mit dem Mittelpunkt E von dieser mitgenommen wird.

Selbstverständlich muß die Länge 1 ein bestimmtes Minimum aufweisen, damit die Drehstange außer Eingriff mit dem Kurvensegment 28 geraten kann, bevor der Drehteller 16 weiterdreht.

## Patentansprüche

1. Vorrichtung zum schrittweisen Antreiben einer Achswelle (23) od. dgl. in einer Drehrichtung um eine Achse (A), wobei an der Achswelle zumindest ein als Drehstange (17) ausgebildetes Eingriffselement angeordnet ist, welches in eine mit einer Mittelachse (B) versehenen Kurvenöffnung (15) eines sich in einer Ebene etwa senkrecht zur Achse der Achswelle bewegenden Schiebers (6) eingreift, dadurch gekennzeichnet, daß die in Bewegungsrichtung der Kurvenöffnung (15) verlaufende Mittelachse (B) durch die Achse (A) der Achswelle verläuft und daß die Kurvenöffnung (15) Aufnahmeschalen (26) zum Mitnehmen der Drehstange (17) aufweist sowie Kurvensegmente (28) zum Festlegen der Endlage der Drehstange (17) nach einer Hubbewegung in eine Richtung (x) aufweist.

2. Vorrichtung nach Anspruch 1, dadurch gekennzeichnet, daß mehrere Drehstangen (17) um einen Mittelpunkt (M) herum in jeweils einem voneinander gleichmäßig entfernten Winkel (w) angeordnet sind, wobei der Mittelpunkt (M) auf der Mittelachse (B) liegt und mit den Mittelpunkten (C, D und E) der Drehstangen (17) einen gemeinsamen Mittelpunkts-Radius (R) bildet.

3. Vorrichtung nach Anspruch 2, dadurch gekennzeichnet, daß alle Drehstangen (17) den gleichen Querschnittsradius (r) aufweisen.

4. Vorrichtung nach Anspruch 3, dadurch gekennzeichnet, daß die Kurvenöffnung (15) eine Breite (b) aufweist, die dem Abstand (a) zweier benachbarter Drehstangen (17), gemessen zwischen deren Mittelpunkten, zuzüglich der beiden Querschnittsradien (r) entspricht.

5. Vorrichtung nach Anspruch 4, dadurch gekennzeichnet, daß die Aufnahmeschalen (26) über den von der Breite (b) gebildeten Lichtraum in einer Tiefe (t) hinausragen, die dem Mittelpunkts-Radius (R) zuzüglich des Querschnittsradius (r) vermindert um die Hälfte der Breite (b) entspricht.

6. Vorrichtung nach Anspruch 4, dadurch gekennzeichnet, daß die Aufnahmeschalen (26) in einem Maß (u) in den Lichtraum der Breite (b) einragen, welches dem Querschnittsradius (r) entspricht.

7. Vorrichtung mit einem Gehäuse für den Schieber nach wenigstens einem der Ansprüche 1 bis 6, dadurch gekennzeichnet, daß der Schieber (6) in einem Innenraum (J) des von Gehäuseteilen (1 bis 5) gebildeten Gehäuses angeordnet ist und entlang von Schienen (8) gleitet, die an Seitenstreifen (5) des Gehäuses angeformt sind.

8. Vorrichtung nach wenigstens einem der Ansprüche 1 bis 7, dadurch gekennzeichnet, daß die Drehstangen (17) an einem Drehteller (16) angeordnet sind, welcher mit der Achswelle (23) verbunden ist.

9. Vorrichtung nach Anspruch 8, dadurch gekennzeichnet, daß der Drehteller in einem Kuppelraum (K) des Gehäuses oberhalb des Innenraumes (J) ruht.

10. Vorrichtung nach Anspruch 8 oder 9, dadurch gekennzeichnet, daß die Achswelle einerseits in einem Kugellager (24) andererseits in einem Freilauf (25) abgestützt ist.

## Claims

1. Device for stepped driving of an axle shaft (23) or the like in a direction of rotation about an axis (A), wherein at least one engagement element constructed as a turning rod (17) is arranged on the axle shaft, this engagement element engaging in a curved opening (15), provided with a central axis (B), of a sliding member (6) moving in a plane roughly perpendicular to the axis of the axle shaft, characterised in that the central axis (B) running in the direction of movement of the curved opening (15) runs through the axis (A) of the axle shaft and in that the curved opening (15) has receiving dishes (26) for entraining the turning rod (17) as well as curved segments (28) for fixing the end position of the turning rod (17) after a stroke in a direction (x).

2. Device according to claim 1, characterised in that a plurality of turning rods (17) is arranged round a centre (M), at equal angles (w) from one another in each case, the centre (M) lying on the central axis (B) and forming a common centre radius (R) with the centres (C, D and E) of the turning rods (17).

3. Device according to claim 2, characterised in that all turning rods (17) have the same cross-sectional radius (r).

4. Device according to claim 3, characterised in that the curved opening (15) has a width (b) corresponding to the distance (a) between two adjacent turning rods (17), measured between the centres thereof, plus the two cross-sectional radii (r).

5. Device according to claim 4, characterised in that the receiving dishes (26) project beyond the clear space formed by the width (b) by a depth (t) corresponding to the centre radius (R) plus the cross-sectional radius (r) reduced by half the width (b).

6. Device according to claim 4, characterised in that the receiving dishes (26) penetrate into the clear space of width (b) by an amount (u) corresponding to the cross-sectional radius (r).

7. Device with a housing for the sliding member according to at least one of claims 1 to 6, characterised in that the sliding member (6) is arranged in an internal chamber (J) of the housing formed by housing parts (1 to 5) and slides along rails (8) moulded on lateral strips (5) of the housing.

8. Device according to at least one of claims 1 to 7, characterised in that the turning rods (17) are arranged on a rotary plate (16) connected to the axle shaft (23).

9. Device according to claim 8, characterised in that the rotary plate rests in a coupling chamber (K) of the housing above the internal chamber (J).

10. Device according to claim 8 or 9, characterised in that the axle shaft is supported in a ball bearing (24) at one end and in a free wheel (25) at the other end.

## Revendications

1. Dispositif pour l'entraînement pas à pas d'un arbre axial d'essieu (23) ou analogue, dans un sens de rotation autour d'un axe (A) dans lequel, sur l'arbre axial, est disposé un élément de prise en forme de tige de rotation (17), qui est en prise avec une ouverture arrondie (15) munie d'un axe médian (B) d'un coulisseau (6) se déplaçant dans un plan approximativement perpendiculaire à l'axe de l'arbre axial, caractérisé en ce que l'axe médian de l'ouverture arrondie (15) s'étendant dans le sens du mouvement passe par l'axe (A) de l'arbre axial et que l'ouverture arrondie (15) présente des alvéoles d'entraînement (26) pour entraîner la tige de rotation (17) ainsi que des segments arrondies (28) pour définir la position finale de la tige de rotation (17) après une course dans une direction (x).

2. Dispositif selon la revendication 1, caractérisé en ce qu'il y a plusieurs tiges de rotation (17), disposées autour d'un point central (M), éloignées régulièrement l'une de l'autre d'un même angle (W), le point central (M) se trouvant sur l'axe médian (B) et il forme un rayon (R) avec les centres (C, D, et D, E) des tiges de rotation.

3. Dispositif selon la revendication 2, caractérisé en ce que toutes les tiges de rotation présentent le même rayon (r) transversal.

4. Dispositif selon la revendication 3, caractérisé en ce que l'ouverture arrondie (15) présente une largeur (b) qui correspond à la distance (a) entre les axes des deux tiges (17) de rotation voisines et en plus mesurés entre leur centre en plus des deux rayons transversaux (r).

5. Dispositif selon la revendication 4, caractérisé en ce que les alvéoles d'entraînements (26) pénètrent, par l'intermédiaire de l'ajour de largeur (b), d'une profondeur (t), qui correspond au centre de rayon (R) et en plus du rayon transversal (r), moins la moitié de la largeur (b).

6. Dispositif selon la revendication 4, caractérisé en ce que les alvéoles (26) pénètrent d'une longueur (u) dans l'ajour de largeur (b), qui correspond au rayon (r) transversal.

7. Dispositif avec un boîtier pour le coulisseau selon au moins l'une des revendications 1 à 6, caractérisé en ce que en ce que le coulisseau (6) est logé dans un espace interne (j) de boîtier constitué de pièces de boîtier (de 1 à 5) et glisse le long de rails (8) qui sont formés sur les bandes latérales (5) du boîtier.

8. Dispositif selon au moins l'une des revendications 1 à 7, caractérisé en ce que les tiges de rotation (17) sont disposées sur un disque rotatif (16) qui est solidaire de l'arbre axial (23).

9. Dispositif selon la revendication 8, caractérisé en ce que le disque rotation repose dans un dôme (K) du boîtier, au dessus de l'axe interne (j).

10. Dispositif selon la revendication 8 ou 9, caractérisé en ce que l'arbre axial est en appui d'une part, sur un roulement (24) et d'autre part, sur une roue libre (25).

FIG. 1

EP 0 204 738 B1

FIG. 2

FIG.3

EP 0 204 738 B1